# EUROPEAN PATENT SPECIFICATION

(11) **EP 1 898 631 B1**
(45) Date of publication and mention of the grant of the patent: **01.04.2009**
(21) Application number: 06254665.0
(22) Date of filing: 07.09.2006
(51) Int. Cl.: H04N 5/225

(54) **Mobile communication device and base or holder therefor**
Mobiles Telekommunikationsgerät
Dispositif de telecommunication mobile

(43) Date of publication of application: 12.03.2008
(73) Proprietor: Pace Plc, Saltaire Shipley West Yorkshire BD18 3LF (GB)
(72) Inventor: Dixon, Anthony c/o Pace Micro Technology Plc, Shipley, BD18 3LF (GB)
(74) Representative: Wood, Graham

(56) References cited:
- EP-A- 1 458 169
- EP-A2- 1 133 185
- GB-A- 2 413 235
- US-A1- 2004 189 792
- US-B1- 6 466 249

## Description

The invention to which this invention relates is to a mobile communication device in the form of a mobile telephone or PDA, which device is provided with a viewing means incorporating a camera lens for the taking of photographs and/or video. The invention further relates to the provision of a base or holder for the reception of said device and to a means of utilisation of the device and the holder in conjunction, to provide a beneficial effect to a user of the device.

The provision of communication devices such as mobile telephones or PDA's is well known and it is increasingly the case that most members of the general public own or hire at least one of said devices. While many of the devices are kept on or about a person at most times, said devices are required to be charged from time to time and said charging typically occurs by connection of the device to a mains electricity supply. At these times, the device is typically provided in a stationary location in a premises. Furthermore, communication devices which are owned by the elderly or children, in particular, are often found not to be used for prolonged periods of time and therefore are again kept at a stationary location in a premises.

Many of said devices are now provided with a viewing means in the form of a camera which allows digital photographs and/or portions of video to be taken and then be viewable immediately via a screen on the communication device and/or stored in a memory in the device or transferred from the device to a remote viewing means. In some devices a user may be able to rotate and/or tilt the camera to alter the view provided thereby, by simply moving the appropriate portion with their hands as described in GB 2413235 for example.

EP21133185 discloses a removable camera module attached to a video phone bare of any remote control.

US2004/0207728 is silent as to any mobile telephone or PDA. Rather it only relates to a pan and tilt function.

US5561519 is silent as to any mobile telephone or PDA. Rather the camera is installed on a holder.

The aim of the present invention is to utilise the viewing means which typically comprise a digital data memory linked to a viewing lens, to be utilised even when the device is not necessarily carried by the person who owns the same.

The invention is as set out in claim 1.

In a first aspect of the invention, there is provided image capturing apparatus, said apparatus including a communication device, said device having at least one lens connected to means for processing data into a viewable image or video images, a holder for the selective location of the device thereon, said holder incorporates movement means such that the position of the said device can be selectively adjusted so as to allow the images captured by the communication device to be controlled characterised in that the position is selectively adjustable from a remote location.

In one embodiment, the movement means incorporates a motor mounted to cause movement of a portion of the holder on which the device can be located.

Typically the holder is connected to a power supply and/or may be provided with batteries so as to allow the motor and the movement means to be powered.

In one embodiment, the power supply can also be used to charge the device when it is located on the holder. The power supply can also be used to power the device, if required.

In one embodiment, the said communication device has the ability to transmit and/or receive signals to and/or from a remote location such as, for example, another mobile phone or similar communication device and thereby allow data representative of the captured images to be transmitted to the remote location.

In one embodiment, the holder is provided with a means to receive signals either directly from a device at a remote location device, or alternatively, via the communication device located on the base and said signals are used to control the movement of the movement means of the holder and hence the device.

In one embodiment the device holder includes a speaker via which data received from the device itself or received by the device from a remote location can be generated as audio.

Typically, the angle of the device with respect to the holder can be adjusted and/or the rotational position of the device with respect to the holder can be adjusted by control of the movement means. Preferably movement of the movement means is possible about two axes.

In one embodiment, the device is controlled such that the viewing means takes a series of images at selected time intervals and said images are transmitted to the remote location for viewing.

Alternatively, the device is set such that the viewing means takes a series of continuous images. In either embodiment the data can be transmitted to a remote location.

In one embodiment the device or holder includes a microphone and data captured via the microphone can be transmitted.

Yet further, and alternatively, the said device is inactive until a change in condition is detected in the environment around the said device such as, for example, the occurrence of a noise, switching on of a light, detection of smoke or the like whereupon the viewing means is activated.

The communications used between the device and the base can be wire or wireless connection such as, for example, Bluetooth or similar systems.

In one embodiment the apparatus includes a communication device, a holder for the device, movement means to allow the device to be moved with respect to at least part of the holder, said apparatus including data transmission and receiving means, and an image capturing lens, and said apparatus receives data which is relayed to the movement means to allow the control of the device movement and transmits data which is indicative of the video images which are captured by the device.

In one embodiment, the remote location is another communication device.

Specific embodiments of the invention are now described with reference to the accompanying drawings, wherein:-
Figure 1 illustrates in schematic manner an embodiment of the invention; and
Figure 2 illustrates in plan the possibility of movement of the communication device with respect to the base.

Referring now to the figures, there is illustrated a communication device 2 in use, in accordance with the invention in combination with a holder 4. The holder 4 is connected to a power supply 6 and includes a movement means portion 8 having a location formation 10 formed therein for the reception of the communication device. The communication device, in this embodiment, is in the form of a mobile phone having a display screen 14, keys 16, a viewing camera lens 18 and speaker 19.

In this embodiment, the portion to which the device is located at the holder, also has electrical connections so as to, firstly, allow the power supply to be provided to the communication device 2 and also, for a charging facility to be provided as part of the holder such that when the device is positioned on the holder, the battery in the same can be charged.

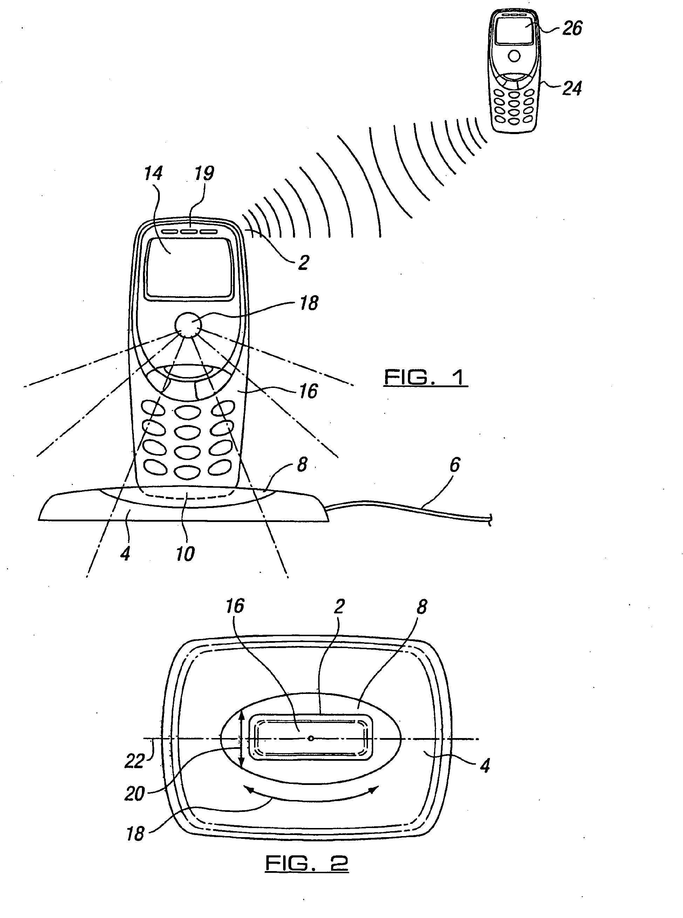

The camera lens 18 on the communication device, is provided to be active and acts as a means for viewing the environment surrounding the holder. The images captured by the camera lens can then be transmitted from the device 2 via a suitable communication means such as a mobile telephone network, to a further communication device 24 (shown here in Figure 1 but typically geographically separated from the device 2). The received data is then used to display the captured images from device 2 on the display screen 26 of the device 24 such that the user of that device 24 can then be aware of what is happening in the environment surrounding the communication device 2.

The remotely located device 24 can also be used as a control means for controlling the orientation and angle of the movable portion 8 of the holder 4 and hence device 2 by the user dialling from their device 24 to connect to the communication device 2 held on the holder. A link between the communication device 2 and the control means for the movable portion 8 of the holder is used to cause the movement of the holder portion 8 as a result of the directions received from the device 24 either by voice or tone sequences and hence the communication device 2 can be controlled as shown in Figure 2 to move about axis 16, typically through 360° as indicated by the arrow 18 and/or the angular orientation of the portion 8 and device 2 can be adjusted as indicated by the arrow 20 about axis 22. As a result, the camera lens 18 on the communication device 2 is effectively moved and can scan throughout the surrounding environment.

It is envisaged that there are many practical implementations of this invention such as, for example, the apparatus can be used to provide a monitoring facility in, for example, a room in which a baby or child is sleeping. This means that the device 2 is in the child's room and the parents, by carrying the remote device 24, can leave the baby in the room whilst ensuring that the baby is continuing to be monitored via the camera lens 18 of the device 2 and the communication network connection to device 24. Furthermore, this could be used for monitoring of an environment of old age pensioners, ill persons, for security purposes, a video phone system or the like.

If required, the holder or device can also include a microphone system so as to detect any sounds which may occur in the surrounding environment and can include a speaker so as to allow the person or persons at the remote location to communicate with the base via the communication device 2 mounted on the same and speak to a person within the environment.

## Claims

1. Image capturing apparatus, said apparatus including
a communication device (2) in the form of a mobile telephone or PDA, having at least one lens (18) connected to means for processing data into a viewable image or video images,
a holder (4) for the location of the device thereon, said holder incorporating movement means (8) such that the position of the said device can be selectively adjusted so as to allow the images captured by the communication device to be controlled, **characterised in that** the position is selectively adjustable from a remote location.

2. Apparatus according to claim 1 wherein the movement means incorporates a motor mounted to cause movement of a portion of the holder on which the device can be located.

3. Apparatus according to claim 1 wherein the apparatus includes control means for the movement means to allow the images which are captured by the device to be selectively controlled by movement of the device.

4. Apparatus according to claim 3 wherein the control means for the communication device allow the zooming in or out of the lens.

5. Apparatus according to claim 3 wherein the control means allow the selection of the capture of still or moving pictures.

6. Apparatus according to claim 1 wherein the holder is connected to a power supply (6) so as to provide power to the movement means.

7. Apparatus according to claim 6 wherein the power supply is connected to the communication device.

8. Apparatus according to claim 1 wherein the communication device has the ability to transmit and receive signals to and from a device (24) at a remote location.

9. Apparatus according to claim 1 wherein the holder is provided with a data receiving means to receive signals from a device at a remote location.

10. Apparatus according to claim 1 wherein the holder is provided with a data receiving means to receive signals from the device mounted thereon.

11. Apparatus according to claims 9 or 10 wherein the said received signals are used to control the movement of the movement means of the holder.

12. Apparatus according to claim 1 wherein the angle of the device with respect to the holder can be adjusted.

13. Apparatus according to claim 1 wherein the rotational position of the device with respect to the holder can be adjusted.

14. Apparatus according to claim 1 wherein movement of the movement means of the holder and device is possible about two axes.

15. Apparatus according to claim 1 wherein the communication device is controlled such that the viewing means takes a series of images at selected time intervals and said images are transmitted to a remote location for viewing.

16. Apparatus according to claim 1 wherein the communication device is controlled such that the viewing means takes a series of continuous images.

17. Apparatus according to claim 1 wherein the communication device is inactive until a change in condition is detected in the environment surrounding the said device.

18. Apparatus according to claim 17 wherein the change in condition is any or any combination of occurrence of a noise, switching on of a light, detection of smoke, detection of movement.

19. Apparatus according to claim 1 wherein the communication between the device and the holder is by wire.

20. Apparatus according to claim 1 wherein communication between the device and the base is by wireless connection.

21. Apparatus according to claim 1 wherein the apparatus includes a speaker to allow audio to be generated.

22. Apparatus according to claim 1 wherein the apparatus includes data receiving and transmission means, said apparatus receiving data signals which are relayed to the movement means to allow the control of the device movement and transmits data signals which are indicative of the video images captured by the device.

## Patentansprüche

1. Bilderfassungsvorrichtung, wobei die genannte Vorrichtung Folgendes aufweist:
ein Kommunikationsgerät (2) in der Form eines Mobiltelefons oder PDA mit wenigstens einer Linse (18), die mit einer Einrichtung zum Verarbeiten von Daten zu einem sichtbaren Bild oder Videobildern verbunden ist,
eine Aufnahme (4) zum Einsetzen des Geräts in sie, wobei die genannte Aufnahme ein Bewegungsmittel (8) aufweist, sodass die Position des genannten Geräts selektiv eingestellt werden kann, damit die von dem Kommunikationsgerät erfassten Bilder gesteuert werden können, **dadurch gekennzeichnet, dass** die Position von einem fernen Standort aus selektiv eingestellt werden kann.

2. Vorrichtung nach Anspruch 1, bei der das Bewegungsmittel einen Motor aufweist, der so montiert ist, dass er die Bewegung eines Teils der Aufnahme, in die das Gerät eingesetzt werden kann, verursacht.

3. Vorrichtung nach Anspruch 1, wobei die Vorrichtung Steuermittel für das Bewegungsmittel aufweist, damit die von dem Gerät erfassten Bilder durch die Bewegung des Geräts selektiv gesteuert werden können.

4. Vorrichtung nach Anspruch 3, bei der die Steuermittel für das Kommunikationsgerät das Heran- oder Herauszoomen der Linse ermöglichen.

5. Vorrichtung nach Anspruch 3, bei der die Steuermittel die Auswahl der Erfassung von Stand- oder Bewegtbildern ermöglichen.

6. Vorrichtung nach Anspruch 1, bei der die Aufnahme mit einer Stromversorgung (6) verbunden ist, um die Bewegungsmittel mit Strom zu versorgen.

7. Vorrichtung nach Anspruch 6, bei der die Stromversorgung mit dem Kommunikationsgerät verbunden ist.

8. Vorrichtung nach Anspruch 1, bei der das Kommunikationsgerät die Fähigkeit hat, Signale von bzw. zu einem Gerät (24) an einem fernen Standort zu empfangen bzw. zu senden.

9. Vorrichtung nach Anspruch 1, bei der die Aufnahme mit einer Datenempfangsvorrichtung zum Empfangen von Signalen von einem Gerät an einem fernen Standort versehen ist.

10. Vorrichtung nach Anspruch 1, bei der die Aufnahme mit einer Datenempfangsvorrichtung zum Empfangen von Signalen von dem daran angebrachten Gerät versehen ist.

11. Vorrichtung nach Anspruch 9 oder 10, bei der die genannten empfangenen Signale zum Steuern der Bewegung der Bewegungsmittel der Aufnahme verwendet werden.

12. Vorrichtung nach Anspruch 1, bei der der Winkel des Geräts im Verhältnis zu der Aufnahme eingestellt werden kann.

13. Vorrichtung nach Anspruch 1, bei der die Drehposition des Geräts im Verhältnis zu der Aufnahme eingestellt werden kann.

14. Vorrichtung nach Anspruch 1, bei der die Bewegung der Bewegungsmittel der Aufnahme und des Geräts um zwei Achsen möglich ist.

15. Vorrichtung nach Anspruch 1, bei der das Kommunikationsgerät so gesteuert wird, dass das Beobachtungsmittel in ausgewählten Zeitintervallen eine Reihe von Bildern aufnimmt und die genannten Bilder zum Betrachten an einen fernen Standort gesendet werden.

16. Vorrichtung nach Anspruch 1, bei der das Kommunikationsgerät so gesteuert wird, dass das Beobachtungsmittel eine Reihe von fortlaufenden Bildern aufnimmt.

17. Vorrichtung nach Anspruch 1, bei der das Kommunikationsgerät inaktiv ist, bis eine Zustandsänderung in der Umgebung des genannten Geräts erkannt wird.

18. Vorrichtung nach Anspruch 17, bei der die Zustandsänderung ein Stattfinden eines Geräuschs, des Einschaltens eines Lichts, einer Detektion von Rauch, einer Detektion von Bewegung oder eine beliebige Kombination davon ist.

19. Vorrichtung nach Anspruch 1, bei der die Kommunikation zwischen dem Gerät und der Aufnahme kabelgebunden ist.

20. Vorrichtung nach Anspruch 1, bei der die Kommunikation zwischen dem Gerät und der Basis durch drahtlose Verbindung erfolgt.

21. Vorrichtung nach Anspruch 1, wobei die Vorrichtung einen Lautsprecher zum Ermöglichen der Tonerzeugung aufweist.

22. Vorrichtung nach Anspruch 1, wobei die Vorrichtung Mittel zum Empfangen und Senden von Daten aufweist, wobei die genannte Vorrichtung Datensignale empfängt, die an die Bewegungsmittel weitergeleitet werden, um die Steuerung der Bewegung des Geräts zu ermöglichen, und Datensignale sendet, die für die von dem Gerät erfassten Videobilder bezeichnend sind.

## Revendications

1. Appareil de saisie d'images, ledit appareil comprenant:
un dispositif de communication (2) sous forme d'un téléphone mobile ou PDA ayant au moins un objectif (18) connecté à des moyens qui traitent des données pour produire une image fixe visionnable ou des images vidéo,
un support (4) sur lequel est placé le dispositif, ledit support (4) incorporant des moyens d'actionnement (8) qui permettent d'ajuster sélectivement la position dudit dispositif pour rendre possible le contrôle des images saisies par le dispositif de communication, **caractérisé en ce que** la position peut être ajustée sélectivement à partir d'un emplacement distant.

2. Appareil selon la revendication 1, dans lequel les moyens d'actionnement comprennent un moteur monté de sorte à mouvoir une partie du support sur lequel le dispositif peut être placé.

3. Appareil selon la revendication 1, dans lequel l'appareil comprend des moyens de commande des moyens d'actionnement, qui permettent aux moyens d'actionnement de contrôler sélectivement, par un mouvement du dispositif, les images qui sont saisies par ce dispositif.

4. Appareil selon la revendication 3, dans lequel les moyens de commande du dispositif de communication rendent possibles des zooms avant et arrières de l'objectif.

5. Appareil selon la revendication 3, dans lequel les moyens de commande rendent possible la sélection de la saisie d'images fixes ou vidéo.

6. Appareil selon la revendication 1, dans lequel le support est connecté à une alimentation (6) pour alimenter en énergie les moyens d'actionnement.

7. Appareil selon la revendication 6, dans lequel l'alimentation est connectée au dispositif de communication.

8. Appareil selon la revedication 1, dans lequel le dispositif de communication peut émettre et recevoir des signaux reçus ou émis par un dispositif (24) en une position distante.

9. Appareil selon la revendication 1, dans lequel le support est pourvu de moyens récepteurs de données qui reçoivent des signaux émis par un dispositif occupant une position distante.

10. Appareil selon la revendication 1, dans lequel le support est pourvu de moyens récepteurs de données qui reçoivent des signaux émis par le dispositif monté sur le support.

11. Appareil selon les revendications 9 ou 10, dans lequel lesdits signaux reçus sont utilisés pour contrôler le mouvement des moyens d'actionnement du support.

12. Appareil selon la revendication 1, dans lequel l'angle du dispositif relativement au support peut être ajusté.

13. Appareil selon la revendication 1, dans lequel la position de rotation du dispositif relativement au support peut être ajustée.

14. Appareil selon la revendication 1, dans lequel le mouvement des moyens d'actionnement du support et du dispositif est possible autour de deux axes.

15. Appareil selon la revendication 1, dans lequel le dispositif de communication est contrôlé de telle sorte que les moyens de visionnement prennent une série d'images à des intervalles de temps sélectionnés et lesdites images sont transmises vers un emplacement distant pour être visionnées.

16. Appareil selon la revendication 1, dans lequel le dispositif de communication est contrôlé de telle sorte que les moyens de visionnement prennent une série d'images continues.

17. Appareil selon la revendication 1, dans lequel le dispositif de communication demeure inactif jusqu'à la détection d'un changement d'état dans l'environnement qui entoure ledit dispositif.

18. Appareil selon la revendication 17, dans lequel le changement d'état est une quelconque survenue ou combinaison de survenues d'un bruit, de l'allumage d'une lumière, d'une détection de fumée, ou d'une détection de mouvement.

19. Appareil selon la revendication 1, dans lequel la communication entre le dispositif et le support se fait par connexion câblée.

20. Appareil selon la revendication 1, dans lequel la communication entre le dispositif et la base se fait par connexion sans fil.

21. Appareil selon la revendication 1, dans lequel l'appareil comprend un haut-parleur pour la génération de signaux audio.

22. Appareil selon la revendication 1, dans lequel l'appareil comprend des moyens de réception et d'émission de données, ledit appareil recevant des signaux de données qui sont communiqués aux moyens d'actionnement pour rendre possible la commande d'actionnement du dispositif, et émettant des signaux de données qui indiquent les images vidéo saisies par le dispositif.
